# EUROPÄISCHE PATENTSCHRIFT

(11) **EP 2 203 668 B1**
(45) Veröffentlichungstag und Bekanntmachung des Hinweises auf die Patenterteilung: **27.03.2013**
(21) Anmeldenummer: 08839791.4
(22) Anmeldetag: 16.10.2008
(51) Int. Cl.: F16K 1/52

(54) **REGULIERVENTIL**
CONTROL VALVE
SOUPAPE DE RÉGULATION

(30) Priorität: 19.10.2007 DE 102007050454
(43) Veröffentlichungstag der Anmeldung: 07.07.2010
(73) Patentinhaber: Danfoss A/S, 6430 Nordborg (DK)
(72) Erfinder: VIDIC, Tomaz, SI-1251 Moravce (SI); MØLBAEK, Jens, Jørgen, DK-6430 Nordborg (DK)
(86) Internationale Anmeldenummer: PCT/DK2008/000364
(87) Internationale Veröffentlichungsnummer: WO 2009/049624

(56) Entgegenhaltungen:
- DE-A1- 2 506 592
- FR-A- 1 460 848
- US-A- 3 253 610

## Beschreibung

Die Erfindung betrifft ein Regulierventil, das ein Gehäuse mit einem Ventilsitz und ein an den Ventilsitz anlegbares Ventilelement aufweist, wobei das Ventil-element über eine Betätigungsfläche betätigbar ist und eine maximale Hubhöhe des Ventilelements einstellbar ist.

Regelventile dienen in der Regel zur Voreinstellung der maximalen Durchflussmenge, z. B. bei Zentralheizungen, wobei die maximale Durchflussmenge für jeden einzelnen Heizkörper über ein entsprechendes Regulier-ventil eingestellt werden muss, da jeder Heizkörper unterschiedliche Durchflusswiderstände aufweist.

Die Voreinstellung der maximalen Durchflussmenge erfolgt dabei in der Regel durch ein einstellbares Drosselelement, das im Regulierventil angeordnet ist. Zusätzlich weist das Regulierventil in der Regel ein Ventilelement auf, das mit Hilfe eines Stellelements gegen einen Ventilsitz bewegbar ist, um so die aktuelle Durchflussmenge durch den Heizkörper individuell zu regeln. Die Durchflussmenge bestimmt die Wärmeabgabe eines Heizkörpers. Durch die individuelle Regelung ist daher eine individuelle Wärmeabgabe der Heizkörper regelbar, was in der Regel erwünscht ist. Die Voreinstellung der maximalen Durchflussmenge ist dabei der individuellen Regelung übergeordnet. Unter Voreinstellung ist das Festlegen der maximalen Durchflussmenge zu verstehen oder anders ausgedrückt, das Festlegen des maximalen Öffnungsquerschnitts des Regulierventils. Durch Bewegen des Ventilelements in Richtung zum Ventilsitz kann die Durchflussmenge zwar verringert werden, die voreingestellte maximale Durchflussmenge kann jedoch nicht überschritten werden.

Aus DE 2 305 027 ist ein Regulierventil bekannt, wobei der maximale Öffnungsquerschnitt unabhängig von der Lage des Ventilelements einstellbar ist. Dabei ist das Ventilelement von einem hülsenförmigen Drosselelement umgeben, wobei das dem Ventilsitz zugewandte Ende des Drosselelements abgeschrägt ist und das Drosselelement im Ventilgehäuse drehbar ist. Aufgrund des abgeschrägten Endes des Drosselelements kann durch eine Drehung des Drosselelements der maximale Öffnungsquerschnitt verändert werden, und so die maximale Durchflussmenge eingestellt werden. Die maximale Hubhöhe des Ventilelements ist dabei unabhängig vom eingestellten maximalen Öffnungsquerschnitt und nicht einstellbar.

Ein derartiger Ausbau ist jedoch relativ aufwändig, wobei eine hohe Fertigungsgenauigkeit erforderlich ist, um bei der Vielzahl der verwendeten Elemente ein dichtes Regulierventil zu erhalten.

Ein Regulierventil der eingangs genannten Art ist beispielsweise aus DE 37 43 707 A1 bekannt. Bei diesem Regulierventil ist das Ventilelement in einem Voreinstellkörper axial verschiebbar gelagert, wobei die Lage des Voreinstellkörpers bezüglich eines Ventilgehäuses und eines Ventilsitzes einstellbar ist. Durch die Lage des Voreinstellkörpers wird der maximale Öffnungsquerschnitt und damit die maximale Durchflussmenge des Ventils festgelegt. Durch weiteres Einführen des Voreinstellkörpers verkleinert sich der Querschnitt, durch Herausbewegen des Voreinstellkörpers vergrößert sich der maximale Querschnitt. Bei einer Bewegung des Voreinstellkörpers wird das Ventilelement mitbewegt, wobei die maximale Hubhöhe des Ventilelements durch einen Anschlag am Voreinstellkörper definiert ist. Da eine axiale Verstellung des Voreinstellkörpers gleichzeitig eine axiale Bewegung des Ventilelements verursacht, verschiebt sich auch die Lage einer Betätigungsfläche, die an einer vom Ventilsitz abgewandten Stirnseite des Ventilelements angeordnet ist. Diese Betätigungsfläche dient zur Anlage für ein Stellelement, wie beispielsweise ein Thermostatelement.

Das Dokument US 3253610 A zeigt ein Regulierventil gemäß dem Oberbegriff von Anspruch 1.

Eine axiale Verschiebung des Voreinstellelements zusammen mit dem Ventilelement kann dazu führen, dass zwischen dem Stellelement und der Betätigungsfläche kein direkter Kontakt mehr besteht. Eine Stellbewegung des Stellelements wird dann nicht mehr direkt auf das Ventilelement übertragen, sondern erst nach einer gewissen Verzögerung, die daraus resultiert, dass das Stellelement zunächst den Abstand zwischen sich und der Betätigungsfläche überwinden muss.

Eine Veränderung der maximalen Durchflussmenge hat daher einen direkten, negativen Einfluss auf das Regelverhalten.

Der Erfindung liegt nun die Aufgabe zugrunde, trotz veränderbarer Hubhöhe des Ventilelements eine zufrieden stellende Regelung zu erreichen.

Erfindungsgemäß wird diese Aufgabe bei einem Regulier-ventil der eingangs genannten Art dadurch gelöst, dass die maximale Hubhöhe des Ventilelements mit einer längenverstellbaren Verbindung einstellbar ist, die zwischen Betätigungsfläche und Ventilelement angeordnet ist.

Dadurch wird erreicht, dass die Lage der Betätigungsfläche auch bei einer Verstellung der maximalen Hubhöhe des Ventilelements im Bezug zum Gehäuse des Regulier-ventils konstant bleibt. Durch die Änderung der maximalen Hubhöhe des Ventilelements erfolgt gleichzeitig eine Veränderung der maximalen Durchflussmenge. Die maximale Durchflussmenge wird also durch die maximale Hubhöhe des Ventilelements eingestellt. Weitere Elemente sind, abgesehen von der längenverstellbaren Verbindung, nicht notwendig. Insbesondere wird kein zusätzliches Drosselelement wie z.B. eine Drossel benötigt. Da bei einer Verstellung der maximalen Hubhöhe des Ventilelements die Betätigungsfläche nicht verschoben wird, bleibt die Betätigungsfläche unabhängig vom voreingestellten Maximalwert der Durchflussmenge in Kontakt mit einem Stellelement. Dadurch ist eine gute Regelung des Regelventils möglich.

Die längenverstellbare Verbindung ist als Zwischenelement ausgebildet; das über ein Gewinde mit dem Ventilelement verbunden ist. Über ein Gewinde lässt sich relativ einfach eine Rotationsbewegung in eine translatorische Bewegung umsetzen. Durch ein Verdrehen des Zwischenelements in Bezug zum Ventilelement erfolgt aufgrund des zwischen diesen beiden angeordneten Gewindes gleichzeitig eine translatorische Bewegung zwischen diesen beiden Elementen. Diese lässt sich dabei relativ genau steuern, so dass die maximale Durchflussmenge feinfühlig einstellbar ist.

Das Zwischenelement steht mit einem Einstellelement in Wirkverbindung, wobei das Einstellelement drehbar im Gehäuse gelagert ist und das Zwischenelement zumindest teilweise umgibt. Das Einstellelement dient nun zur Einleitung einer Verstellbewegung durch einen Benutzer. Durch Betätigen des Einstellelements erfolgt eine Bewegung des Zwischenelements und so eine Verstellung der maximalen Hubhöhe des Ventilelements. Da das Einstellelement das Zwischenelement zumindest teilweise umgibt, ist eine kompakte Anordnung möglich.

Bevorzugterweise ist das Zwischenelement drehfest und axial verschiebbar mit dem Einstellelement verbunden. Eine Verstellbewegung des Einstellelements, wodurch die maximale Hubhöhe des Ventilelements eingestellt wird, und die durch Drehen des Einstellelements erfolgt, wird so direkt auf das Zwischenelement übertragen. Da das Zwischenelement dabei axial im Einstellelement verschiebbar ist, wird durch ein Betätigen des Einstellelements eine Betätigung des Ventilelements über die Betätigungsfläche nicht verhindert, da eine derartige Betätigung nur eine axiale Verschiebung des Zwischenelements zusammen mit dem Ventilelement hervorruft. Mit einer axialen Richtung wird in diesem Zusammenhang die Längsausdehnung des Ventilelements bezeichnet, die auch der Bewegung des Ventilelements in Bezug zum Ventilsitz entspricht.

Bevorzugterweise ist die Betätigungsfläche an einer ersten Stirnseite eines Stößels angeordnet, der mit einer zweiten Stirnseite am Zwischenelement anliegt. Dadurch ist es möglich, dass das Zwischenelement eine Rotationsbewegung ausführt, ohne dass die Betätigungsfläche mitbewegt wird. Dies führt zwar zu einer Relativbewegung zwischen Stößel und Zwischenelement, dies ist aber unproblematisch. Gleichzeitig kann durch einen einfachen Austausch des Stößels die Lage der Betätigungsfläche in Bezug zum Gehäuse geändert werden. Dies kann beispielsweise dann erforderlich sein, wenn für das Regulierventil nur weniger Platz als gewöhnlich zur Verfügung steht.

Dabei ist besonders bevorzugt, dass das Zwischenelement in Richtung zum Stößel mit einer Feder belastet ist. Die Verbindung zwischen Stößel und Zwischenelement erfolgt also durch Kraftschluss. Dies ermöglicht eine Herstellung mit relativ großen Toleranzen. Gleichzeitig wird durch die Feder das Zwischenelement und damit das Ventilelement vom Ventilsitz weg bewegt, so dass das Regulierventil ohne Betätigung der Betätigungsfläche geöffnet ist.

In einem bevorzugten Ausführungsbeispiel ist das Zwischenelement und der Stößel einstückig ausgebildet. Durch die einstückige Ausbildung können die Herstellkosten weiter gesenkt werden. Dabei erfolgt beim Drehen des Verstellelements zwar gleichzeitig eine Rotation der Betätigungsfläche, dies kann in vielen Fällen jedoch in Kauf genommen werden.

Bevorzugterweise wirkt ein Stellelement auf die Betätigungsfläche. Mit Hilfe des Stellelements ist es möglich, die Lage des Ventilelements in Bezug zum Ventilsitz individuell zu verändern. Das Regulierventil dient damit nicht nur zum festen Einstellen einer maximalen Durchflussmenge, sondern gleichzeitig zur individuellen Regelung dieser Durchflussmenge, wobei die eingestellte, maximale Durchflussmenge jedoch nicht überschritten werden kann.

Dabei ist besonders bevorzugt, dass das Stellelement als Dehnstoffelement oder als elektrischer Antrieb ausgebildet ist. Bei der Ausbildung als Dehnstoffelement erfolgt eine Regelung der Durchflussmenge in Abhängigkeit von der Umgebungstemperatur. Bei einer Erhöhung der Umgebungstemperatur dehnt sich das Dehnstoffelement üblicherweise aus, wodurch der Stößel und damit das Zwischenelement und das Ventilelement in Richtung des Ventilsitzes gedrückt werden, und so die Durchflussmenge durch das Regulierventil verringert wird. Dadurch verringert sich beispielsweise auch die Wärmeabgabe eines am Regulierventil angeschlossenen Heizkörpers. Bei einem Absinken der Umgebungstemperatur zieht sich das Dehnstoffelement zusammen, was zu einem Öffnen des Regulierventils führt, da das Ventilelement über das Zwischenelement durch die Feder in Richtung zur Betätigungsfläche und damit zum Stellelement belastet ist. Durch eine Ausbildung des Stellelements als elektrischer Antrieb ist es auf einfache Weise möglich, die Durchflussmenge durch das Regulierventil zu verändern. Es ist z. B. denkbar, den elektrischen Antrieb über einen Ferneinsteller von einer zentralen Stelle aus zu steuern.

Bevorzugterweise ist das Ventilelement im Gehäuse drehfest und axial beweglich geführt. Dadurch wird sichergestellt, dass durch ein Verdrehen des Zwischenelements nur eine Längenverstellung erfolgt und sich das Ventilelement nicht mitdrehen kann. Gleichzeitig wird durch die axiale Führung des Ventilelements im Gehäuse die Bewegungsrichtung des Ventilelements mit hoher Genauigkeit festgelegt und auf den ebenfalls im Gehäuse angeordneten Ventilsitz abgestimmt. Dabei ist zwar denkbar, dass das Gehäuse aus mehreren Einzelteilen, beispielsweise zwei Gehäuseteilen, besteht, dies beeinflusst die Genauigkeit der Führung des Ventilelements in Bezug zum Ventilsitz aber nur unwesentlich.

Vorzugsweise ist im Einstellelement ein Führungselement angeordnet, das den Stößel führt. Dieses Führungselement ist dabei zwischen Stößel und dem umgebenden Einstellelement angeordnet und umgibt ebenfalls einen Teil des Stößels. Durch dieses Führungselement ist dabei zusätzlich zum Führen des Stößels eine Abdichtung nach außen möglich.

Dabei ist bevorzugterweise zwischen Stößel und Führungselement mindestens eine Dichtung angeordnet. Diese Dichtung verhindert, dass ein Fluid, welches durch das Regulierventil strömt, zwischen Stößel und Führungselement austreten kann.

Bevorzugterweise ist im Führungselement ein Anschlag angeordnet. Wenn keine Kraft auf die Betätigungsfläche ausgeübt wird, wird das Zwischenelement mit Hilfe der Feder gegen diesen Anschlag im Führungselement gedrückt. Der Anschlag verhindert, dass das Zwischenelement durch die Feder aus dem Regulierventil heraus gedrückt wird, wenn auf die Betätigungsfläche keine Kraft ausgeübt wird.

Vorzugsweise ist zwischen Einstellelement und Gehäuse mindestens eine Dichtung angeordnet. Diese Dichtung verhindert das Austreten von Fluid, das durch das Regulierventil strömt, entlang der Verbindung zwischen Einstellelement und Gehäuse, obwohl eine Relativbewegung zwischen Einstellelement und Gehäuse möglich ist.

Bevorzugterweise weist das Ventilelement an seinem vom Zwischenelement abgewandten Ende einen vergrößerten Kopf auf. Dieser Kopf wird beispielsweise durch eine Durchmesservergrößerung des Ventilelements erzeugt, kann aber auch ein zusätzliches Element sein, das an das Ventilelement angeschraubt oder sonst wie befestigt wird. Der Kopf ist dabei beispielsweise kegelförmig oder konusartig ausgebildet und dient so zu einer sicheren Anlage des Ventilelements am Ventilsitz. Gleichzeitig wird durch die Ausbildung des Kopfes des Ventilelements das Regelverhalten beeinflusst.

In einem bevorzugten Ausführungsbeispiel weist das Regulierventil einen becherförmigen Deckel mit einem Boden und einer Mantelfläche auf. Dieser Deckel verhindert einen unbefugten Zugriff auf das Einstellelement und gleichzeitig das Eindringen von Verunreinigungen. Dabei kann er auch zur Aufnahme und Halterung für das Stellelement dienen.

In einem bevorzugten Ausführungsbeispiel weist der Deckel am Boden einen Fortsatz auf, der mit dem Stößel zusammenwirkt. Das Regulierventil dient dabei nur zur Einstellung der maximalen Durchflussmenge. Ein zusätzliches Stellelement wird durch den Stößel ersetzt, so dass keine individuelle Einstellung der Durchflussmenge erfolgen kann. Da eine individuelle Regelung nicht in allen Fällen erforderlich ist, können so auf einfache Weise Kosten gespart werden, indem auf das Stellelement verzichtet wird.

Die Erfindung wird im Folgenden anhand bevorzugter Ausführungsbeispiele in Verbindung mit der Zeichnung näher beschrieben. Hierin zeigen:
- Fig. 1: ein Regulierventil in einer ersten Stellung,
- Fig. 2: das Regulierventil gemäß Fig. 1 in einer zweiten Stellung,
- Fig. 3: das Regulierventil in einer bevorzugten Ausführungsform und
- Fig. 4: das Regulierventil in einer weiteren Ausführungsform

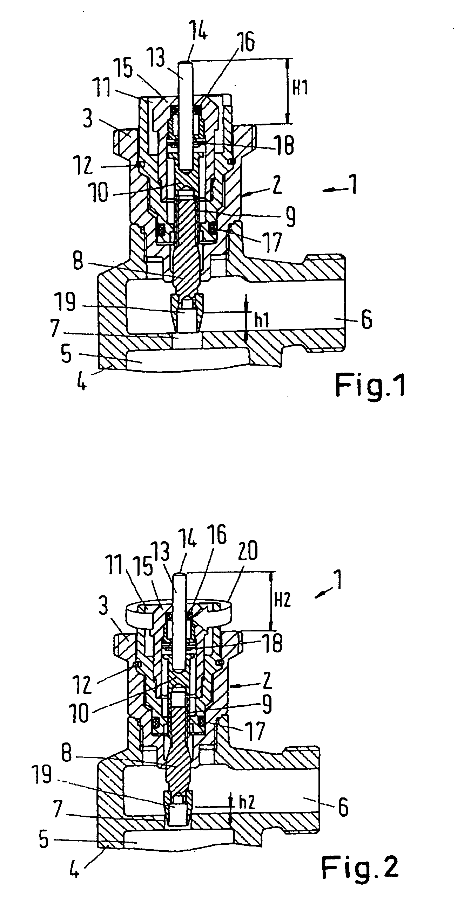

Fig. 1 zeigt in schematischer Schnittdarstellung ein Regulierventil 1 mit einem Gehäuse 2, das zwei Gehäuseteile 3, 4 aufweist. Der Gehäuseteil 4 weist einen Einlass 5 und einen Auslass 6 für ein Wärme oder Kälte übertragendes Fluid auf. Ein derartiges Fluid ist beispielsweise Wasser.

In der Nähe des Einlasses 5 ist ein Ventilsitz 7 im Gehäuseteil 4 angeordnet. Das Gehäuseteil 3 ist von der dem Einlass 5 gegenüber liegenden Seite des Gehäuseteils 4 in das Gehäuseteil 4 eingeschraubt. Im Gehäuseteil 3 ist ein Ventilelement 8 axial beweglich und drehfest gelagert. Das Ventilelement 8 kann durch axiale Bewegung an den Ventilsitz 7 angelegt werden.

Das Ventilelement 8 ist an seiner vom Ventilsitz 7 abgewandten Seite über ein Gewinde 9 mit einem Zwischenelement 10 verbunden. Das Zwischenelement 10 und teilweise auch das Ventilelement 8 sind von einem Einstellelement 11 umgeben, das im Gehäuseteil 3 drehbar angeordnet ist. Die axiale Lage des Einstellelements 11 im Gehäuseteil 3 ist durch eine axiale Lagesicherung 12 festgelegt, die als Sprengring ausgebildet ist.

Das Einstellelement 11 ist mit dem Zwischenelement 10 drehfest verbunden, lässt aber eine axiale Bewegung des Zwischenelements 10 zu. An der vom Ventilelement 8 abgewandten Seite des Zwischenelements 10 ist ein Stößel 13 angeordnet, wobei dessen vom Zwischenelement 10 abgewandte Stirnseite als Betätigungsfläche 14 ausgebildet ist.

Der Stößel 13 ist in einem Führungselement 15 geführt. Das Führungselement 15 ist bei diesem Beispiel in das Einstellelement 11 eingeschraubt und hülsenförmig ausgebildet. Zwischen dem Führungselement 15 und dem Stößel 13 ist eine Dichtung 16 angeordnet. Eine weitere Dichtung 17 befindet sich zwischen dem Einstellelement 11 und dem Gehäuseteil 3.

Im Führungselement 15 ist ein Anschlag 18 angeordnet, der die Bewegung des Zwischenelements 10 in Richtung zur Betätigungsfläche 14 begrenzt. Das Ventilelement 8 an seinem vom Zwischenelement 10 abgewandten Ende weist einen Kopf 19 auf, der kegelförmig ausgebildet ist und so gut mit dem Ventilsitz 7 zusammenwirkt.

Der Abstand zwischen der Betätigungsfläche 14 und einer Oberkante des Gehäuseteils 3 ist mit H1 bezeichnet. Der Abstand zwischen einer Kante am Kopf 19 und dem Ventilsitz 7 ist mit h1 bezeichnet.

Eine Einstellung der maximalen Durchflussmenge erfolgt nun durch ein Verdrehen des Einstellelements 11. Da dieses drehfest mit dem Zwischenelement 10 verbunden ist, rotiert auch das Zwischenelement 10, das über das Gewinde 9 mit dem Ventilelement 8 verbunden ist. Eine Rotation des Ventilelements 8 wird durch das Gehäuseteil 3 verhindert. Aufgrund des Gewindes 9 wird so eine Verschiebung des Ventilelements 8 in Bezug auf das Zwischenelement 10 hervorgerufen, es erfolgt also eine Längenversteifung. Dadurch wird die maximale Hubhöhe des Ventilelements verändert.

In Fig. 1 ist eine relativ große Hubhöhe h1 eingestellt. In Fig. 2 ist das gleiche Regelventil wie in Fig. 1 dargestellt, die maximale Hubhöhe h2 des Ventilelements ist allerdings deutlich geringer als die maximale Hubhöhe h1 in Fig. 1. Ein Abstand H2 zwischen der Betätigungsfläche 14 und der Oberkante des Gehäuseteils 3 entspricht dabei dem Abstand H1 in Fig. 1. Die maximale Hubhöhe des Ventilelements 8 kann also verändert werden, ohne dass sich die Lage der Betätigungsfläche 14 in Bezug auf das Gehäuse 2 ändert.

Die Verringerung der maximalen Durchflussmenge erfolgt durch entsprechendes Drehen des Einstellelements 11, was durch einen Pfeil 20 in Fig. 2 symbolisiert ist. Zur Erhöhung der maximalen Durchflussmenge muss das Einstellelement 11 in die entgegen gesetzte Richtung gedreht werden.

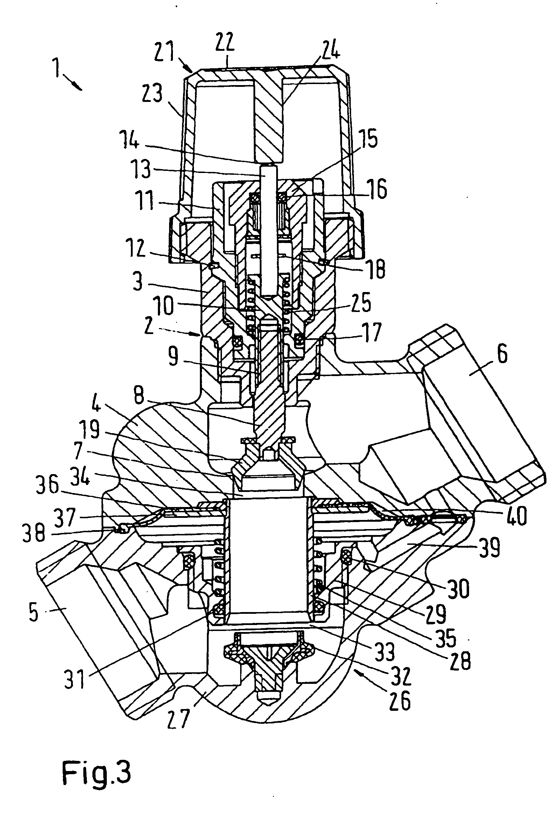

In Fig. 3 ist ein bevorzugtes Ausführungsbeispiel des Regulierventils 1 dargestellt, wobei gleiche Teile mit gleichen Bezugszeichen versehen sind. Das Regulierventil 1 ist dabei mit einem Deckel 21 versehen, der einen Boden 22 und eine Mantelfläche 23 aufweist. In der Mitte des Bodens 22 ist ein Fortsatz 24 angeordnet, der sich in Richtung auf den Stößel 13 erstreckt und mit der Betätigungsfläche 14 in Kontakt steht. Das Regulierventil 1 dient bei diesem Beispiel nur zur Einstellung einer maximalen Durchflussmenge. Eine individuelle Regelung der Durchflussmenge ist nicht vorgesehen. Eine Betätigung der Betätigungsfläche 14 wird vielmehr durch den Stößel 24 verhindert.

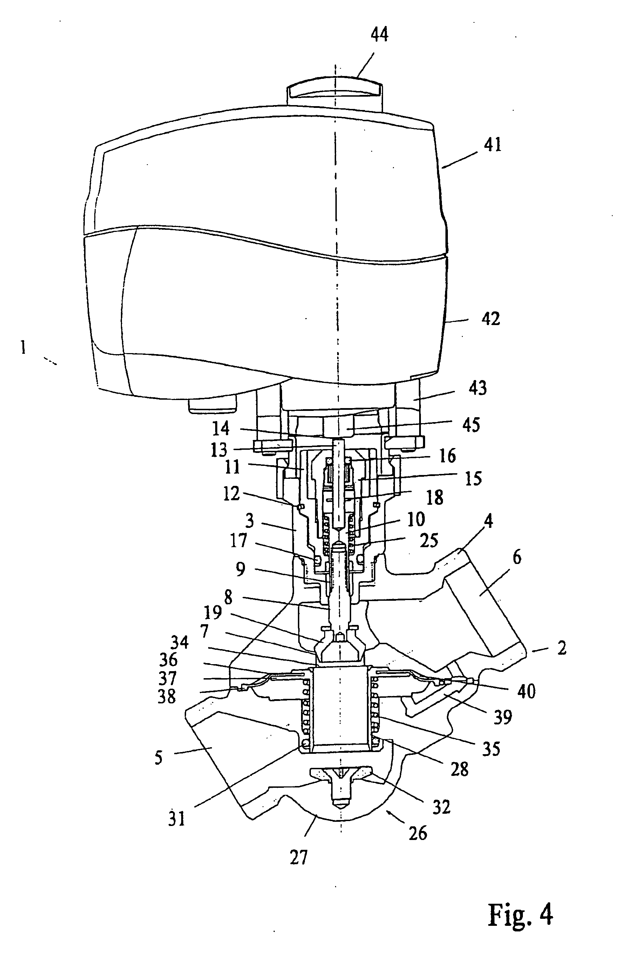

Für eine individuelle Regelung ist es notwendig, den Stößel 24 durch ein Stellelement wie beispielsweise ein Dehnstoffelement oder einen elektrischen Antrieb zu ersetzen. Ein derartiger Austausch erfolgt mit einem gleichzeitigen Tausch des Deckels 21, der dann keinen Fortsatz 24 mehr aufweist, sondern gegebenenfalls eine Haltestruktur für das Stellelement, das die Position des Fortsatzes 24 einnimmt. Diese Ausgestaltung ist in Fig. 4 dargestellt.

Das Zwischenelement 10 ist gemäß Fig. 3 mit einer Feder 25 in Richtung zur Betätigungsfläche 14 belastet. Die Feder 25 sorgt so dafür, dass das Ventilelement 8 mit Hilfe des Zwischenelements 10 vom Ventilsitz 7 weggedrückt wird. Gleichzeitig wird das Zwischenelement 10 gegen den Stößel 13 und der Stößel 13 mit seiner Betätigungsfläche 14 gegen den Fortsatz 24 gedrückt. Eine sichere Anlage der Betätigungsfläche 14 am Fortsatz 24 bzw. gegebenenfalls an einem Stellelement ist dadurch gewährleistet.

Das Regulierventil 1 weist bei diesem Ausführungsbeispiel eine zusätzliche zweite Ventileinrichtung 26 auf, die in einem dritten Gehäuseteil 27 angeordnet ist. Der Einlass 5 befindet sich bei diesem Ausführungsbeispiel ebenfalls im dritten Gehäuseteil 27.

Die zweite Ventileinrichtung 26 weist ein Druckregelventilelement 28 auf, das als Hohlzylinder ausgebildet ist. Das Druckregelventilelement 28 ist in einem Einsatz 29 geführt, der in das dritte Gehäuseteil 27 eingeschraubt ist. Zwischen dem dritten Gehäuseteil 27 und dem Einsatz 29 ist eine Dichtung 30 angeordnet, die z. B. als O-Ring-Dichtung ausgebildet ist. Eine weitere Dichtung 31 befindet sich zwischen dem Einsatz 29 und dem Druckregelventilelement 28.

Das Druckregelventilelement 28 wirkt mit einem Ventilsitz 32 zusammen, der in das dritte Gehäuseteil 27 eingeschraubt ist. Der Ventilsitz 32 kann aber auch einstückig mit dem dritten Gehäuseteil 27 ausgebildet sein. Flüssigkeit, die durch einen Spalt 33 zwischen dem Druckregelventilelement 28 und dem Ventilsitz 32 tritt, durchströmt das Druckregelventilelement 28 und gelangt in eine Kammer 34, an die sich der Ventilsitz 7 anschließt und die gegebenenfalls durch das Ventilelement 8 verschlossen werden kann.

Das Druckregelventilelement 28 wird durch eine Druckfeder 35 vom Ventilsitz 32 weg belastet. Dabei ist das Druckregelventilelement 28 mit einer Membran 36 verbunden, die mit einem Teil ihrer Erstreckung auf einer Stützplatte 37 aufliegt. Die Membran 36 ist dabei mit ihrem äußeren Rand 38 zwischen dem zweiten Gehäuseteil 4 und dem dritten Gehäuseteil 27 eingespannt. Dabei wird die Membran 36 durch das Druckregelventilelement 28 durchsetzt.

Die Membran 36 dient zum einen der Abdichtung zwischen dem zweiten Gehäuseteil 4 und dem dritten Gehäuseteil 27. Zusätzlich dient sie dazu, das Druckregelventilelement 28 gegen die Kraft der Druckfeder 35 zu bewegen, wenn der Druck in der Kammer 34 die Kraft der Druckfeder 35 übersteigt.

Dabei ist die Membran 36 im Wesentlichen punktsymme-trisch ausgebildet, so dass bei einer Druckbelastung im Grunde keine Querspannungen entstehen.

Vom Auslass 6 erstreckt sich ein Druckübertragungskanal 39 zu einer Kammer 40, die auf der der Kammer 34 gegenüberliegenden Seite der Membran 36 angeordnet ist.

Das Druckregelventilelement 28 nimmt aufgrund der Verbindung mit der Membran 36 eine Position ein, in der der Druck in der Kammer 34, also auf der Oberseite der Membran 24, der Summe vom Druck in der Kammer 40, also unter der Membran 36, und der Federkraft der Druckfeder 35 entspricht. Dabei ist der Druck in der Kammer 34 der Druck vor dem Ventilsitz 7 und der Druck in der Kammer 40 der Druck am Auslass 6. Das Druckregelventilelement 28 hält dadurch eine Druckdifferenz über den Ventilsitz 7 aufrecht, die der Kraft der Druckfeder 35 entspricht, unabhängig vom Druck am Einlass 5 und am Auslass 6.

Diese Druckregelung führt zu einem festen Zusammenhang zwischen dem Öffnungsgrad des Ventilelements 8 und der Durchflussmenge, da die Druckdifferenz konstant gehalten wird.

In Fig. 4 ist eine Ausbildung des Regulierventils 1 dargestellt, die im Wesentlichen der Ausbildung gemäß Fig. 3 entspricht. Anstelle des becherförmigen Deckels 21 ist jedoch ein Stellelement 41 mit dem Regulierventil 1 verbunden, und der Einsatz 29 ist einstückig mit dem dritten Gehäuseteil 27 ausgebildet. Ein Antrieb des Stellelements 41 ist in einem Gehäuse 42 untergebracht, das mit Schraubbolzen 43 am Gehäuse 2 befestigt ist. Zur Bedienung des Antriebs ist ein Bedienelement 44 vorgesehen. Die Bewegung des Antriebs wird über einen Stößel 45, der an der Stirnseite 14 anliegt, auf den Stößel 13 übertragen. Dadurch erfolgt mit Hilfe des Stellelements 41 eine individuelle Regelung der Durchflussmenge. Anstelle des Antriebs kann auch ein Thermostatelement verwendet werden.

## Patentansprüche

1. Regulierventil, das ein Gehäuse (2) mit einem Ventilsitz (7) und ein an den Ventilsitz (7) anlegbares Ventilelement (8) aufweist, wobei das Ventilelement (8) über eine Betätigungsfläche (14) betätigbar ist und eine maximale Hubhöhe des Ventilelements (8) einstellbar ist, und wo die maximale Hubhöhe des Ventilelements (8) mit einer längenverstellbaren Verbindung einstellbar ist, die zwischen Betätigungsfläche (14) und Ventilelement (8) angeordnet ist, wobei die längenverstellbare Verbindung als Zwischenelement (10) ausgebildet ist, das über ein Gewinde (9) mit dem Ventilelement (8) verbunden ist und **dadurch gekennzeichnet, dass** das Zwischenelement (10) mit einem Einstellelement (11) in Wirkverbindung steht, wobei das Einstellelement (11) drehbar im Gehäuse (2) gelagert ist und das Zwischenelement (10) zumindest teilweise umgibt.

2. Regulierventil nach Anspruch 1, **dadurch gekennzeichnet, dass** das Zwischenelement (10) drehfest und axial verschiebbar mit dem Einstellelement (11) verbunden ist.

3. Regulierventil nach einem der Ansprüche 1 oder 2, **dadurch gekennzeichnet, dass** die Betätigungsfläche (14) an einer ersten Stirnseite eines Stößels (13) angeordnet ist, der mit einer zweiten Stirnseite am Zwischenelement (10) anliegt.

4. Regulierventil nach Anspruch 3, **dadurch gekennzeichnet, dass** das Zwischenelement (10) in Richtung zum Stößel (13) mit einer Feder (25) belastet ist.

5. Regulierventil nach einem der Ansprüche 3 bis 4, **dadurch gekennzeichnet, dass** das Zwischenelement (10) und der Stößel (13) einstückig ausgebildet sind.

6. Regulierventil nach einem der Ansprüche 1 bis 5, **dadurch gekennzeichnet, dass** ein Stellelement (41) auf die Betätigungsfläche (14) wirkt.

7. Regulierventil nach Anspruch 6, **dadurch gekennzeichnet, dass** das Stellelement (41) als Dehnstoffelement oder als elektrischer Antrieb ausgebildet ist.

8. Regulierventil nach einem der Ansprüche 1 bis 7, **dadurch gekennzeichnet, dass** das Ventilelement (8) im Gehäuse (2) drehfest und axial beweglich geführt ist.

9. Regulierventil nach einem der Ansprüche 1 bis 8, **dadurch gekennzeichnet, dass** im Einstellelement (11) ein Führungselement (15) angeordnet ist, das den Stößel (13) führt.

10. Regulierventil nach Anspruch 9, **dadurch gekennzeichnet, dass** zwischen Stößel (13) und Führungselement (15) mindestens eine Dichtung (16) angeordnet ist.

11. Regulierventil nach einem der Ansprüche 3 bis 10, **dadurch gekennzeichnet, dass** im Führungselement (15) ein Anschlag (18) angeordnet ist.

12. Regulierventil nach einem der Ansprüche 1 bis 11, **dadurch gekennzeichnet, dass** zwischen Einstellelement (11) und Gehäuse (2) mindestens eine Dichtung (17) angeordnet ist.

13. Regulierventil nach einem der Ansprüche 1 bis 12, **dadurch gekennzeichnet, dass** das Ventilelement (8) an seinem vom Zwischenelement (10) abgewandten Ende einen Kopf (19) aufweist.

14. Regulierventil nach einem der Ansprüche 1 bis 13, **dadurch gekennzeichnet, dass** es einen becherförmigen Deckel (21) mit einem Boden (22) und einer Mantelfläche (23) aufweist.

15. Regulierventil nach Anspruch 14, **dadurch gekennzeichnet, dass** der Deckel (21) am Boden (22) einen Fortsatz (24) aufweist, der mit dem Stößel (13) zusammenwirkt.

## Claims

1. Control valve comprising a housing (2) with a valve seat (7) and a valve element (8) that can bear on the valve seat (7), the valve element (8) being activatable via an activation surface (14) and a maximum lift height of the valve element (8) being adjustable, the maximum lift height of the valve element (8) being adjustable by means of a longitudinally displaceable connection that is arranged between the activation surface (14) and the valve element (8), the longitudinally displaceable connection having the shape of an intermediary element (10) that is connected to the valve element (8) by means of a thread (9), **characterised in that** the intermediary element (10) is in active connection with an adjustment element (11), the adjustment element (11) being rotatably supported in the housing (2) and at least partly surrounding the intermediary element (10).

2. Control valve according to claim 1, **characterised in that** the intermediary element (10) is unrotatably and axially displaceably connected to the adjustment element (11).

3. Control valve according to claim 1 or 2, **characterised in that** the activation surface (14) is arranged at a first front side of a tappet (13) that bears with a second front side on the intermediary element (10).

4. Control valve according to claim 3, **characterised in that** the intermediary element (10) is loaded in the direction of the tappet (13) by means of a spring (25).

5. Control valve according to claim 3 or 4, **characterised in that** the intermediary element (10) and the tappet (13) are made in one piece.

6. Control valve according to one of the claims 1 to 5, **characterised in that** an adjustment element (41) acts upon the activation surface (14).

7. Control valve according to claim 6, **characterised in that** the adjustment element (41) is made as an expansion element or as an electric drive.

8. Control valve according to one of the claims 1 to 7, **characterised in that** the valve element (8) is unrotatably and axially movably guided in the housing (2).

9. Control valve according to one of the claims 1 to 8, **characterised in that** in the adjustment element (11) a guiding element (15) is provided to guide the tappet (13).

10. Control valve according to claim 9, **characterised in that** at least one sealing (16) is provided between the tappet (13) and the guiding element (15).

11. Control valve according to one of the claims 3 to 10, **characterised in that** a stop (18) is arranged in the guiding element (15).

12. Control valve according to one of the claims 1 to 11, **characterised in that** at least one sealing (17) is arranged between the guiding element (15) and the housing (2).

13. Control valve according to one of the claims 1 to 12, **characterised in that** on the side facing away from the intermediary element (10) the valve element (8) has a head (19).

14. Control valve according to one of the claims 1 to 13, **characterised in that** it comprises a beaker-shaped cover (21) with a bottom (22) and a housing surface (23).

15. Control valve according to claim 14, **characterised in that** at the bottom (22) the cover comprises an extension (24) that interacts with the tappet (13).

## Revendications

1. Soupape de régulation qui présente un boîtier (2) avec un siège de soupape (7) et un élément de soupape (8) pouvant être posé sur le siège de soupape (7), l'élément de soupape (8) pouvant être actionné par le biais d'une surface d'actionnement (14) et une hauteur de levage maximale de l'élément de soupape (8) pouvant être réglée et où la hauteur de levage maximale de l'élément de soupape (8) peut être réglée avec une liaison réglable en longueur, qui est disposée entre la surface d'actionnement (14) et l'élément de soupape (8), la liaison réglable en longueur étant réalisée comme un élément intermédiaire (10) qui est relié par le biais d'un filet (9) à l'élément de soupape (8) et **caractérisée en ce que** l'élément intermédiaire (10) est en liaison active avec un élément de réglage (11), l'élément de réglage (11) étant logé de manière à pouvoir tourner dans le boîtier (2) et entourant au moins en partie l'élément intermédiaire (10).

2. Soupape de régulation selon la revendication 1, **caractérisée en ce que** l'élément intermédiaire (10) est relié de manière solidaire en rotation et axialement mobile à l'élément de réglage (11).

3. Soupape de régulation selon l'une quelconque des revendications 1 ou 2, **caractérisée en ce que** la surface d'actionnement (14) est disposée sur un premier côté avant d'un tiroir (13), dont le second côté avant repose contre l'élément intermédiaire (10).

4. Soupape de régulation selon la revendication 3, **caractérisée en ce que** l'élément intermédiaire (10) est sollicité par un ressort (25) en direction du tiroir (13).

5. Soupape de régulation selon l'une quelconque des revendications 3 à 4, **caractérisée en ce que** l'élément intermédiaire (10) et le tiroir (13) sont réalisés d'un seul tenant.

6. Soupape de régulation selon l'une quelconque des revendications 1 à 5, **caractérisée en ce qu'**un élément de réglage (41) agit sur la surface d'actionnement (14).

7. Soupape de régulation selon la revendication 6, **caractérisée en ce que** l'élément de réglage (41) est réalisé comme un élément extensible ou comme un entraînement électrique.

8. Soupape de régulation selon l'une quelconque des revendications 1 à 7, **caractérisée en ce que** l'élément de soupape (8) est guidé de manière solidaire en rotation et axialement mobile dans le boîtier (2).

9. Soupape de régulation selon l'une quelconque des revendications 1 à 8, **caractérisée en ce qu'**un élément de guidage (15) qui guide le tiroir (13) est disposé dans l'élément de réglage (11).

10. Soupape de régulation selon la revendication 9, **caractérisée en ce qu'**au moins un joint d'étanchéité (16) est disposé entre le tiroir (13) et l'élément de guidage (15).

11. Soupape de régulation selon l'une quelconque des revendications 3 à 10, **caractérisée en ce qu'**une butée (18) est disposée dans l'élément de guidage (15).

12. Soupape de régulation selon l'une quelconque des revendications 1 à 11, **caractérisée en ce qu'**au moins un joint d'étanchéité (17) est disposé entre l'élément de réglage (11) et le boîtier (2).

13. Soupape de régulation selon l'une quelconque des revendications 1 à 12, **caractérisée en ce que** l'élément de soupape (8) présente une tête (19) sur son extrémité éloignée de l'élément intermédiaire (10).

14. Soupape de régulation selon l'une quelconque des revendications 1 à 13, **caractérisée en ce qu'**elle présente un couvercle (21) en forme de coupe avec un fond (22) et une surface enveloppe (23).

15. Soupape de régulation selon la revendication 14, **caractérisée en ce que** le couvercle (21) présente sur le fond (22) une projection (24) qui coopère avec le tiroir (13).
